# EUROPEAN PATENT SPECIFICATION

(11) **EP 4 170 979 B1**
(45) Date of publication and mention of the grant of the patent: **26.11.2025**
(21) Application number: 21826716.9
(22) Date of filing: 16.04.2021
(51) Int. Cl.: H04L 12/42

(54) **CONTROL SYSTEM WITH CROSSED MULTI-RING-NETWORK REDUNDANT NETWORK TOPOLOGY STRUCTURE**
STEUERUNGSSYSTEM MIT EINER REDUNDANTEN NETZWERKTOPOLOGIESTRUKTUR MIT GEKREUZTEN MEHRFACHRINGNETZWERKEN
SYSTÈME DE COMMANDE À STRUCTURE TOPOLOGIQUE DE RÉSEAU REDONDANTE À MULTIPLES RÉSEAUX EN ANNEAU CROISÉS

(30) Priority: 17.06.2020 CN 202010552968
(43) Date of publication of application: 26.04.2023
(73) Proprietor: NR ELECTRIC CO., LTD., Jiangning Nanjing, Jiangsu 211102 (CN); NR Engineering Co., Ltd., Nanjing, Jiangsu 211102 (CN)
(72) Inventor: LIN, Qing, Nanjing Jiangsu 211102 (CN); WEN, Jifeng, Nanjing Jiangsu 211102 (CN); ZHAO, Qingchun, Nanjing Jiangsu 211102 (CN); HU, Shaoqian, Nanjing Jiangsu 211102 (CN); TANG, Zhenyu, Nanjing Jiangsu 211102 (CN); ZHOU, Qiang, Nanjing Jiangsu 211102 (CN); LIU, Minghui, Nanjing Jiangsu 211102 (CN)
(74) Representative: Becker Kurig & Partner Patentanwälte mbB
(86) International application number: PCT/CN2021/087865
(87) International publication number: WO 2021/253960

(56) References cited:
- CN-A- 105 262 063
- CN-U- 205 178 856
- US-A1- 2004 008 720
- US-A1- 2006 120 279
- US-A1- 2009 262 643
- MARK G LARSEN: "Evolution of a hierarchical ring bus network", AFIPS CONFERENCE PROCEEDINGS VOLUME 56 NATIONAL COMPUTER CONFERENCE JUNE 15-18, 1987 CHICAGO, ILLINOIS<PUBATTR/>,, 15 June 1987 (1987-06-15), pages 417 - 422, XP001613357

## Description

### Technical Field

The present invention relates to the field of control systems for communication network topologies of power systems, in particular to a control system based on a crossed multi-ring-network redundant network topology structure.

### Background

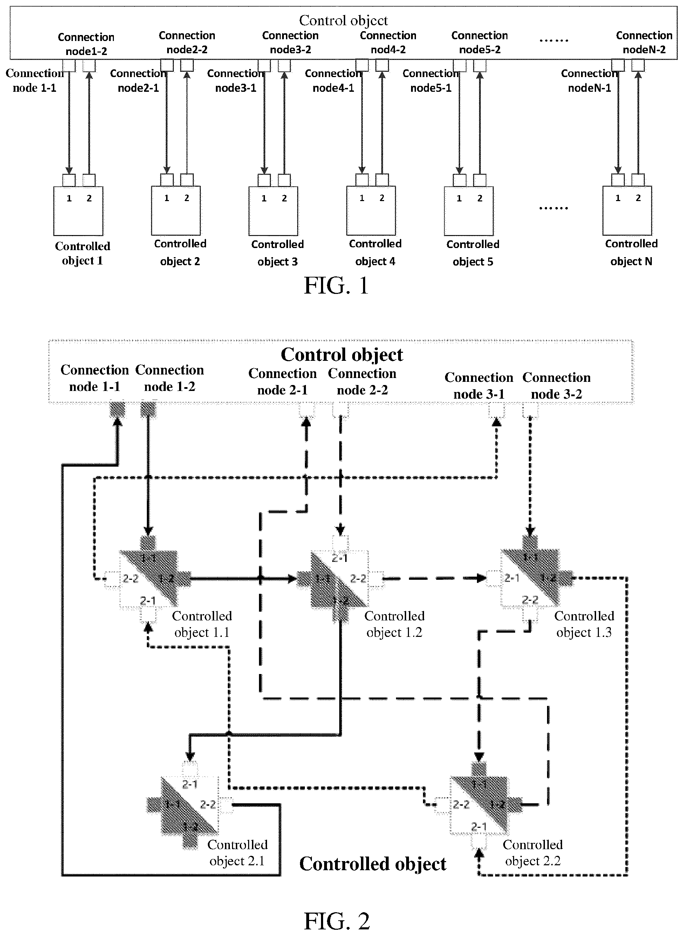

At present, the communication network connection between a valve base controller (VBC) for a direct current converter station and submodule controllers (SMCs) is realized generally by means of point-to-point direct connection for communication. FIG. 1 shows a communication network topology structure, in which the valve base controller (VBC) is a control object, the submodule controllers (SMCs) are controlled objects, and connection nodes of the control object are in a one-to-one correspondence with connection nodes of each of the controlled objects. For N controlled objects, N groups of connection nodes of the control object are required. The number of the connection nodes of the control object increases with the increase of the number of controlled objects, thereby causing many connection nodes and high power consumption of the control object in the communication network topology structure in the prior art.

US2004008720A1 relates to a control network comprising multiple master nodes and multiple slave nodes, connected together in a loop configuration by at least one fiber optic cable. The master nodes share concurrent control over the network nodes by time multiplexing or other techniques. The control network may include two fiber optic rings which carry the same data simultaneously in opposite directions around the loop. A polling scheme may be used by the master nodes such that only one node transmits at a given time in both directions around the loop. The receiving node(s) propagate the transmissions and select between the transmissions based on time, error rate, or other factors. A hierarchical control network may be constructed with upper tier and lower tier fiber optic rings. Multiple master nodes may be used at any level of the ring, and some or all of the rings may include two fiber optics for bidirectional, redundant communication within the network.

### Summary

In order to overcome the shortcomings in the prior art and reasonably reduce the number of connection nodes of a control object to reduce the power consumption of the control object, the present invention provides a new control system based on a multi-ring-network redundant network topology structure, according to independent claim 1. Dependent claims 2-8 define further implementation details of the invention.

According to one aspect, the present invention provides a control system based on a crossed multi-ring-network redundant network topology structure, including:
a control object having a plurality of groups of first connection nodes; and
a plurality of controlled objects, each of the plurality of controlled objects having one or a plurality of groups of second connection nodes;
wherein any one of the plurality of groups of first connection nodes in the control object are sequentially connected to the second connection nodes of at least two of the plurality of controlled objects to form a ring network, the plurality of groups of first connection nodes corresponding to the control object form a plurality of ring networks, and the plurality of ring networks include the plurality of controlled objects.

According to the control system based on a crossed multi-ring-network redundant network topology structure provided by the present invention, the connection nodes of the control object can be connected to the plurality of controlled objects to form the ring networks, such that the number of the connection nodes of the control object can be effectively reduced, thereby reducing the power consumption of the control object. Moreover, the controlled objects can be placed in the plurality of different ring networks, there are redundant connections between the control object and the controlled objects in the control system, and there are standby redundant networks that can be connected when the connection nodes or the networks are abnormal, such that the reliability of the whole control system is improved. In addition, each group of connection nodes of the controlled object in the present invention has a bypass function, such that the nodes are directly connected when the controlled object fails or loses power, thereby not affecting the communication between the control object and other controlled objects.

### Brief Description of the Drawings

In order to more clearly describe the technical solution in the embodiments of the present invention, the following will briefly introduce the accompanying drawings that need to be used in the description of the embodiments. Apparently, the accompanying drawings in the description below are only some embodiments of the present invention. Those of ordinary skill in the art may also derive other accompanying drawings from these accompanying drawings within the scope of protection of the present invention.
FIG. 1 is a schematic diagram of a topology structure of an existing communication network.
FIG. 2 is a schematic diagram of a control system based on a crossed multi-ring-network redundant network topology structure according to one embodiment of the present invention.
FIG. 3 is a schematic diagram of a control system based on a crossed multi-ring-network redundant network topology structure according to another embodiment of the present invention.
FIG. 4 is a schematic diagram of a control system based on an N*N redundant network topology structure.
FIG. 5 is a schematic diagram of a control system based on a 2*2 redundant network topology structure.
FIG. 6 is a schematic diagram of a control system based on a 3*3 redundant network topology structure.
FIG. 7 is a schematic diagram of a control system based on a 4*4 redundant network topology structure.

### Detailed Description of Embodiments

The technical solution in the embodiments of the present invention will be clearly and completely described below with reference to the accompanying drawings in the embodiments of the present invention. Apparently, the described embodiments are a part, rather than all of the embodiments of the present invention. Based on the embodiments in the present invention, all other embodiments obtained by those of ordinary skill in the art without creative efforts shall fall within the scope of protection of the present invention.

According to the present invention, a plurality of controlled objects are connected to a group of connection nodes of a control object to form ring networks, such that the number of the required connection nodes of the control object can be greatly reduced, thereby reducing the power consumption of the control object. Moreover, the controlled objects can be placed in a plurality of different ring networks, there are redundant connections between the control object and the controlled objects in the control system, and there are standby redundant networks that can be connected when the connection nodes or the networks are abnormal, such that the reliability of the whole control system is improved.

FIG. 2 is a schematic diagram of a control system based on a crossed multi-ring-network redundant network topology structure according to one embodiment of the present invention. As shown in FIG. 2, the control system includes a control object and five controlled objects, where the control object includes a valve base controller for a direct current converter station, a remote terminal unit for a power plant with a substation, a monitoring background, a protection information substation, etc., and each of the controlled objects includes a submodule controller, a protective device for the power plant with the substation, a measurement and control device, an intelligent terminal, etc. The control object has three groups of connection nodes (1-1, 1-2), (2-1, 2-2), and (3-1, 3-2), and each of the controlled objects has two groups of connection nodes (1-1, 1-2) and (2-1, 2-2). The "connection nodes" in the accompanying drawings of the present invention represent the "connection nodes".

For the convenience of description, the connection nodes of the control object and the connection nodes of the controlled objects are referred to as first connection nodes and second connection nodes, respectively. Each group of first connection nodes and each group of second connection nodes include an output connection node and an input connection node connected to each other, that is to say, one of the connection nodes in each group serves as an output connection node, and the other one of the connection nodes in each group serves as an input connection node. For example, in the connection nodes (1-1, 1-2), 1-2 serves as the output connection node, and 1-1 serves as the input connection node.

In the embodiment shown in FIG. 2, the output connection node 1-2 of the control object, the input connection node 1-1 of a controlled object 1.1, the output connection node 1-2 of the controlled object 1.1, the input connection node 1-1 of a controlled object 1.2, the output connection node 1-2 of the controlled object 1.2, the input connection node 2-1 of a controlled object 2.1, the output connection node 2-2 of the controlled object 2.1, and the input connection node 1-1 of the control object are sequentially connected to form a ring network, and there are a total of three controlled objects in the ring network.

In the embodiment shown in FIG. 2, the output connection node 2-2 of the control object, the input connection node 2-1 of the controlled object 1.2, the output connection node 2-2 of the controlled object 2.1, the input connection node 2-1 of a controlled object 1.3, the output connection node 2-2 of the controlled object 1.3, the input connection node 1-1 of a controlled object 2.2, the output connection node 1-2 of the controlled object 2.2, and the input connection node 2-1 of the control object are sequentially connected to form a ring network, and there are a total of three controlled objects in the ring network.

In the embodiment shown in FIG. 2, the output connection node 3-2 of the control object, the input connection node 1-1 of the controlled object 1.3, the output connection node 1-2 of the controlled object 1.3, the input connection node 2-1 of the controlled object 2.2, the output connection node 2-2 of the controlled object 2.2, the input connection node 2-1 of the controlled object 1.1, the output connection node 2-2 of the controlled object 1.1, and the input connection node 3-1 of the control object are sequentially connected to form a ring network, and there are a total of three controlled objects in the ring network.

In the embodiment shown in FIG. 2, different groups of the first connection nodes of the same control object are positioned in different ring networks, for example, the connection nodes (1-1, 1-2) and (2-1, 2-2) of the control object are positioned in different ring networks. In the embodiment shown in FIG. 2, different groups of the second connection nodes of the same controlled object are positioned in different ring networks, for example, the connection nodes (1-1, 1-2) and (2-1, 2-2) of the controlled object 1.1 are positioned in different ring networks.

In the embodiment shown in FIG. 2, there are a total of five controlled objects, the ring networks of the connection nodes of the control object and the controlled objects cover the five controlled objects, and only three groups of the connection nodes of the control object are required, such that the number of the connection nodes of the control object can be reduced. There are only five controlled objects in FIG. 2, which is just a simple embodiment given for the convenience of illustrating the solution of the present invention. In practical application, with the increase of the number of the controlled objects, the number of the connection nodes of the control object will be reduced more considerably compared to a solution in the prior art.

In addition, there are three ring networks in FIG. 2, and two groups of connection nodes of the controlled objects 1.1, 1.2, 1.3, and 2.2 are positioned in different ring networks, for example, the connection nodes (1-1, 1-2) and (2-1, 2-2) of the controlled object 1.1 are respectively positioned in solid line and dashed line ring networks, that is to say, the controlled objects 1.1, 1.2, 1.3, and 2.2 exist in two ring networks. In this way, when the connection nodes and the networks are abnormal, there are standby redundant networks that can be connected. For example, when the ring network shown by a solid line in FIG. 2 is abnormal, the controlled object 1.1 can communicate with the control object by the ring network shown by a dashed line, thereby improving the reliability of the whole control system.

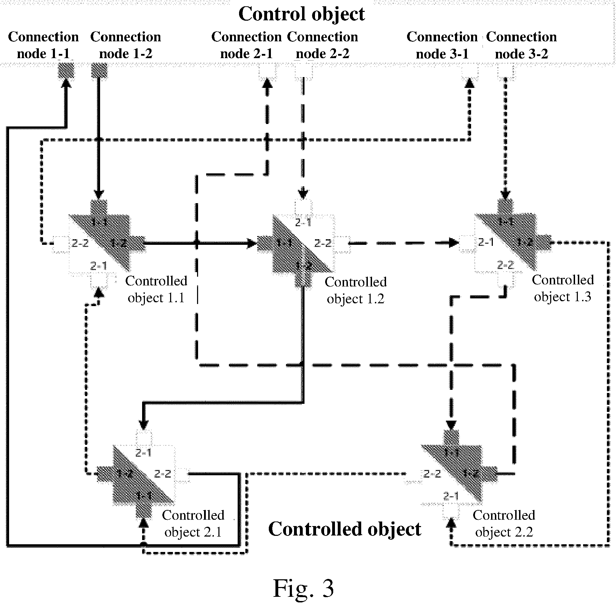

FIG. 3 is a schematic diagram of a control system based on a crossed multi-ring-network redundant network topology structure according to another embodiment of the present invention. Compared to FIG. 2, in which the output connection node 3-2 of the control object, the input connection node 1-1 of the controlled object 1.3, the output connection node 1-2 of the controlled object 1.3, the input connection node 2-1 of the controlled object 2.2, the output connection node 2-2 of the controlled object 2.2, the input connection node 2-1 of the controlled object 1.1, the output connection node 2-2 of the controlled object 1.1, and the input connection node 3-1 of the control object are sequentially connected to form a ring network, and in FIG. 3, the ring network further includes the input connection node 1-1 of the controlled object 2.1 and the output connection node 1-2 of the controlled object 2.1, so there are a total of four controlled objects.

In the embodiment shown in FIG. 2, the controlled object 2.1 only exists in one ring network, so when this ring network is abnormal, the controlled object 2.1 does not has a standby redundant network that can be connected. In the embodiment shown in FIG. 3, the controlled object 2.1 exists in two ring networks, so when one ring network is abnormal, the controlled object 2.1 has a standby redundant network that can be connected.

In the embodiments shown in FIG. 2 and FIG. 3, when one controlled object fails or loses power, the controlled object sets each group of connection nodes to be in an on state. For example, when the controlled object 1.1 fails or loses power, the controlled object 1.1 enables its connection nodes (1-1, 1-2) and (2-1, 2-2) to be in an on state, thereby not affecting the communication between other controlled objects and the control object.

In the embodiments shown in FIG. 2 and FIG. 3, the controlled object has two groups of connection interfaces. However, the controlled object may have any groups of connection interfaces, that is to say, the controlled object may have one or more than two groups of connection interfaces. Under the condition that the controlled object has the plurality of groups of connection nodes, the plurality of ring networks connect one or at least two of the plurality of groups of connection nodes.

It should be noted that FIG. 2 and FIG. 3 are just for the convenience of illustrating two specific implementations of the present invention, and those skilled in the art can obtain various different implementations under the inspiration of this. For example, there may be any number of controlled objects, the controlled object may have any groups of connection nodes, and the control object may also have any groups of connection nodes, which all fall within the scope of the present invention.

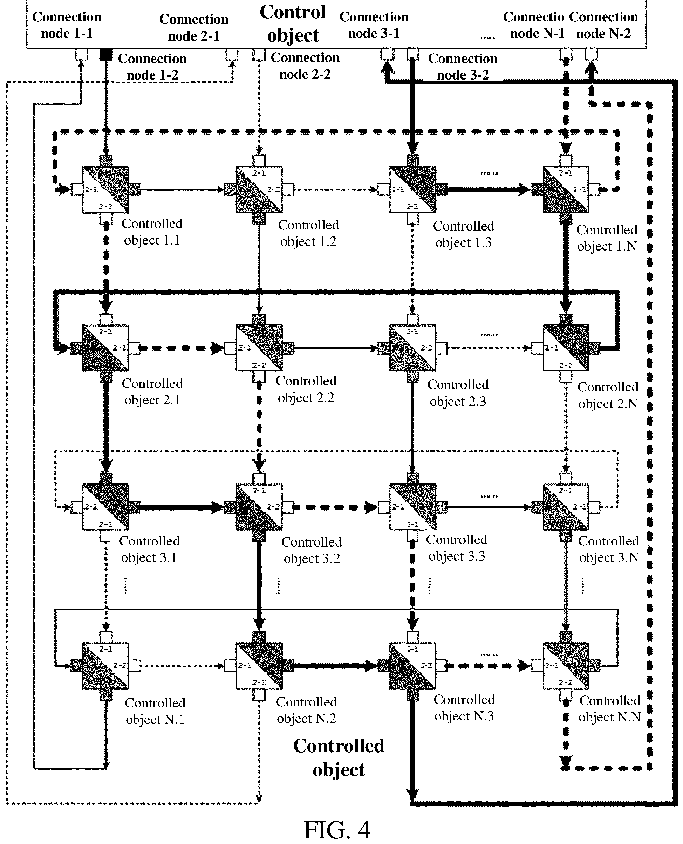

According to the above technical principle of the present invention, some preferred implementations are given below with reference to FIG. 4, FIG. 5, FIG. 6, and FIG. 7. It should be noted that the embodiments in FIG. 4, FIG. 5, FIG. 6, and FIG. 7 are just for further illustrating specific embodiments of the solution of the present invention and should not be construed as limiting the scope of protection of the present invention.

FIG. 4 is a schematic diagram of a control system based on an N*N redundant network topology structure. As shown in FIG. 4, a control system based on an N*N redundant network topology structure includes a control object and N*N controlled objects.

Wherein:
Each of the N*N controlled objects is provided with two groups of connection nodes.

Each group of connection nodes includes an output connection node and an input connection node connected to each other. In a first group, the input connection node is 1-1, and the output connection node is 1-2. In a second group, the input connection node is 2-1, and the output connection node is 2-2. The connection node is an Ethernet interface, a serial port or other conversion interfaces such as optical interfaces or electrical interfaces. The connection nodes of the controlled object have a bypass function, such that the controlled object sets each group of connection nodes to be in an on state when the controlled object fails or loses power, thereby not affecting the communication between the control object and other controlled objects.

The control object is provided with N groups of connection nodes.

One group of connection nodes of the control object and 2N groups of connection nodes of 2N controlled objects are sequentially connected to form ring networks. There are no intersected connection nodes between different ring networks. Two groups of connection nodes of the same control object are positioned in different ring networks.

N is an integer greater than 1, and a value of N may be 2, 3, 4, ..., and theoretically infinite. The following describes control systems where N is equal to 2, 3, and 4.

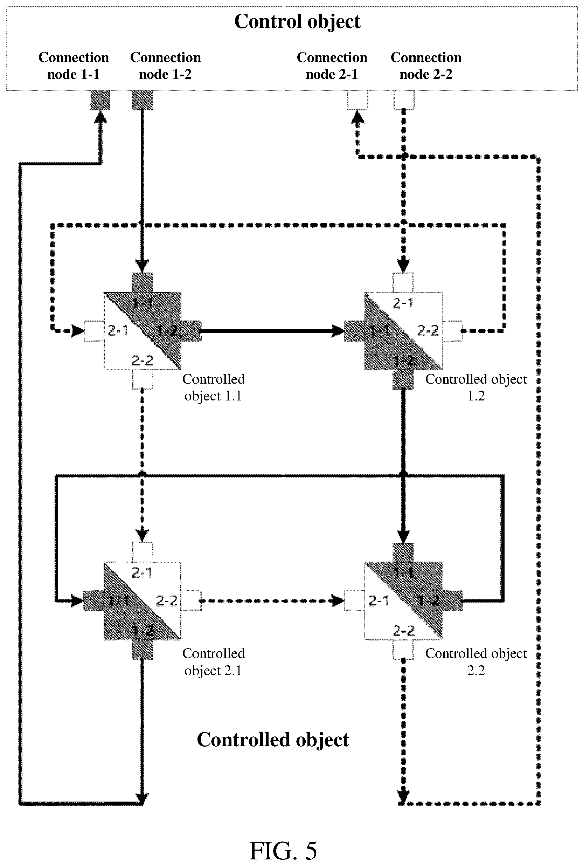

FIG. 5 is a schematic diagram of a control system based on a 2*2 redundant network topology structure. As shown in FIG. 5, two groups of connection nodes of the control object include an input connection node 1-1, an output connection node 1-2, an input connection node 2-1, and an output connection node 2-2, where the input connection node 1-1 and the output connection node 1-2 form a first group, and the input connection node 2-1 and the output connection node 2-2 form a second group.

The controlled objects include a controlled object 1.1, a controlled object 1.2, a controlled object 2.1, and a controlled object 2.2. Each controlled object has two groups of connection nodes. In a first group, an input connection node is 1-1, and an output connection node is 1-2. In a second group, an input connection node is 2-1, and an output connection node is 2-2.

The output connection node 1-2 of the control object, the input connection node 1-1 of the controlled object 1.1, the output connection node 1-2 of the controlled object 1.1, the input connection node 1-1 of the controlled object 1.2, the output connection node 1-2 of the controlled object 1.2, the input connection node 1-1 of the controlled object 2.2, the output connection node 1-2 of the controlled object 2.2, the input connection node 1-1 of the controlled object 2.1, the output connection node 1-2 of the controlled object 2.1, and the input connection node 1-1 of the control object are sequentially connected to form a ring network, and there are a total of four controlled objects in the ring network.

The output connection node 2-2 of the control object, the input connection node 2-1 of the controlled object 1.2, the output connection node 2-2 of the controlled object 1.2, the input connection node 2-1 of the controlled object 1.1, the output connection node 2-2 of the controlled object 1.1, the input connection node 2-1 of the controlled object 2.1, the output connection node 2-2 of the controlled object 2.1, the input connection node 2-1 of the controlled object 2.2, the output connection node 2-2 of the controlled object 2.2, and the input connection node 2-1 of the control object are sequentially connected to form a ring network, and there are a total of four controlled objects in the ring network.

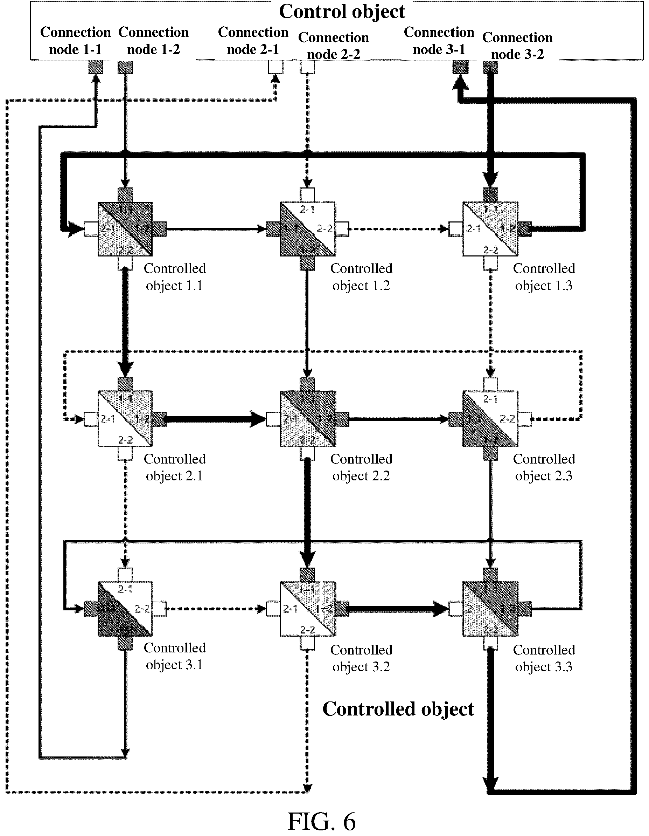

FIG. 6 is a schematic diagram of a control system based on a 3*3 redundant network topology structure. As shown in FIG. 6, two groups of connection nodes of the control object include an input connection node 1-1, an output connection node 1-2, an input connection node 2-1, an output connection node 2-2, an input connection mode 3-1, and an output connection node 3-2, where the input connection node 1-1 and the output connection node 1-2 form a first group, the input connection node 2-1 and the output connection node 2-2 form a second group, and the input connection mode 3-1 and the output connection node 3-2 forms a third group.

The controlled objects include a controlled object 1.1, a controlled object 1.2, a controlled object 1.3, a controlled object 2.1, a controlled object 2.2, a controlled object 2.3, a controlled object 3.1, a controlled object 3.2, and a controlled object 3.3. Each controlled object has two groups of connection nodes. In a first group, an input connection node is 1-1, and an output connection node is 1-2. In a second group, an input connection node is 2-1, and an output connection node is 2-2.

The output connection node 1-2 of the control object, the input connection node 1-1 of the controlled object 1.1, the output connection node 1-2 of the controlled object 1.1, the input connection node 1-1 of the controlled object 1.2, the output connection node 1-2 of the controlled object 1.2, the input connection node 1-1 of the controlled object 2.2, the output connection node 1-2 of the controlled object 2.2, the input connection node 1-1 of the controlled object 2.3, the output connection node 1-2 of the controlled object 2.3, the input connection node 1-1 of the controlled object 3.3, the output connection node 1-2 of the controlled object 3.3, the input connection node 1-1 of the controlled object 3.1, the output connection node 1-2 of the controlled object 3.1, and the input connection node 1-1 of the control object are sequentially connected to form a ring network, and there are a total of six controlled objects in the ring network.

The output connection node 2-2 of the control object, the input connection node 2-1 of the controlled object 1.2, the output connection node 2-2 of the controlled object 1.2, the input connection node 2-1 of the controlled object 1.3, the output connection node 2-2 of the controlled object 1.3, the input connection node 2-1 of the controlled object 2.3, the output connection node 2-2 of the controlled object 2.3, the input connection node 2-1 of the controlled object 2.1, the output connection node 2-2 of the controlled object 2.1, the input connection node 2-1 of the controlled object 3.1, the output connection node 2-2 of the controlled object 3.1, the input connection node 2-1 of the controlled object 3.2, the output connection node 2-2 of the controlled object 3.2, and the input connection node 2-1 of the control object are sequentially connected to form a ring network, and there are a total of six controlled objects in the ring network.

The output connection node 3-2 of the control object, the input connection node 1-1 of the controlled object 1.3, the output connection node 1-2 of the controlled object 1.3, the input connection node 2-1 of the controlled object 1.1, the output connection node 2-2 of the controlled object 1.1, the input connection node 1-1 of the controlled object 2.1, the output connection node 1-2 of the controlled object 2.1, the input connection node 2-1 of the controlled object 2.2, the output connection node 2-2 of the controlled object 2.2, the input connection node 1-1 of the controlled object 3.2, the output connection node 1-2 of the controlled object 3.2, the input connection node 2-1 of the controlled object 3.3, the output connection node 2-2 of the controlled object 3.3, and the input connection node 3-1 of the control object are sequentially connected to form a ring network, and there are a total of six controlled objects in the ring network.

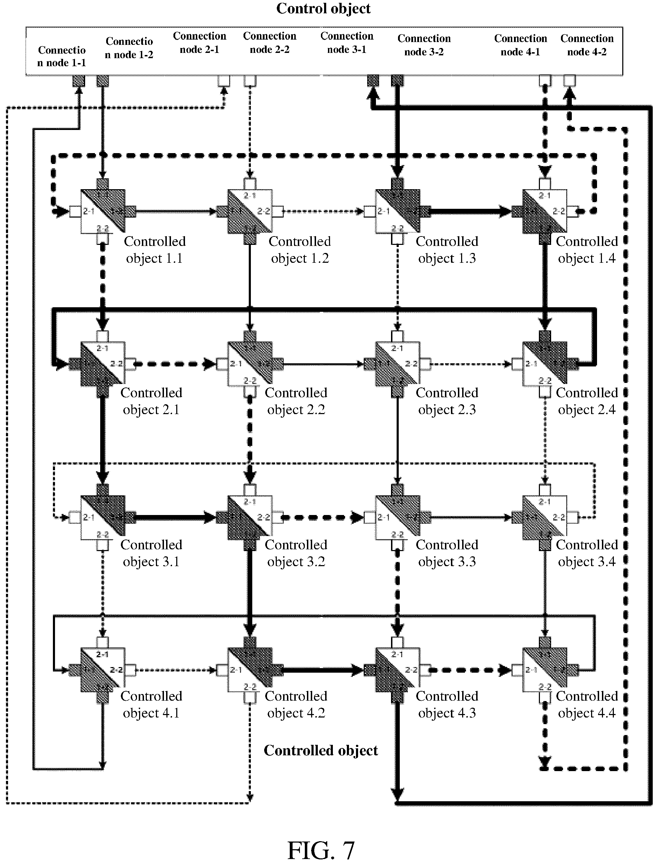

FIG. 7 is a schematic diagram of a control system based on a 4*4 redundant network topology structure. As shown in FIG. 7, two groups of connection nodes of the control object include an input connection node 1-1, an output connection node 1-2, an input connection node 2-1, an output connection node 2-2, an input connection node 3-1, an output connection node 3-2, an input connection node 4-1, and an output connection node 4-2, where the input connection node 1-1 and the output connection node 1-2 form a first group, the input connection node 2-1 and the output connection node 2-2 form a second group, the input connection node 3-1 and the output connection node 3-2 form a third group, and the input connection node 4-1 and the output connection node 4-2 form a fourth group.

The controlled objects include a controlled object 1.1, a controlled object 1.2, a controlled object 1.3, a controlled object 1.4, a controlled object 2.1, a controlled object 2.2, a controlled object 2.3, a controlled object 2.4, a controlled object 3.1, a controlled object 3.2, a controlled object 3.3, a controlled object 3.4, a controlled object 4.1, a controlled object 4.2, a controlled object 4.3, and a controlled object 4.4. Each controlled object has two groups of connection nodes. In a first group, an input connection node is 1-1, and an output connection node is 1-2. In a second group, an input connection node is 2-1, and an output connection node is 2-2.

The output connection node 1-2 of the control object, the input connection node 1-1 of the controlled object 1.1, the output connection node 1-2 of the controlled object 1.1, the input connection node 1-1 of the controlled object 1.2, the output connection node 1-2 of the controlled object 1.2, the input connection node 1-1 of the controlled object 2.2, the output connection node 1-2 of the controlled object 2.2, the input connection node 1-1 of the controlled object 2.3, the output connection node 1-2 of the controlled object 2.3, the input connection node 1-1 of the controlled object 3.3, the output connection node 1-2 of the controlled object 3.3, the input connection node 1-1 of the controlled object 3.4, the output connection node 1-2 of the controlled object 3.4, the input connection node 1-1 of the controlled object 4.4, the output connection node 1-2 of the controlled object 4.4, the input connection node 1-1 of the controlled object 4.1, the output connection node 1-2 of the controlled object 4.1, and the input connection node 1-1 of the control object are sequentially connected to form a ring network, and there are a total of eight controlled objects in the ring network.

The output connection node 2-2 of the control object, the input connection node 2-1 of the controlled object 1.2, the output connection node 2-2 of the controlled object 1.2, the input connection node 2-1 of the controlled object 1.3, the output connection node 2-2 of the controlled object 1.3, the input connection node 2-1 of the controlled object 2.3, the output connection node 2-2 of the controlled object 2.3, the input connection node 2-1 of the controlled object 2.4, the output connection node 2-2 of the controlled object 2.4, the input connection node 2-1 of the controlled object 3.4, the output connection node 2-2 of the controlled object 3.4, the input connection node 2-1 of the controlled object 3.1, the output connection node 2-2 of the controlled object 3.1, the input connection node 2-1 of the controlled object 4.1, the output connection node 2-2 of the controlled object 4.1, the input connection node 2-1 of the controlled object 4.2, the output connection node 2-2 of the controlled object 4.2, and the input connection node 2-1 of the control object are sequentially connected to form a ring network, and there are a total of eight controlled objects in the ring network.

The output connection node 3-2 of the control object, the input connection node 1-1 of the controlled object 1.3, the output connection node 1-2 of the controlled object 1.3, the input connection node 1-1 of the controlled object 1.4, the output connection node 1-2 of the controlled object 1.4, the input connection node 1-1 of the controlled object 2.4, the output connection node 1-2 of the controlled object 2.4, the input connection node 1-1 of the controlled object 2.1, the output connection node 1-2 of the controlled object 2.1, the input connection node 1-1 of the controlled object 3.1, the output connection node 1-2 of the controlled object 3.1, the input connection node 1-1 of the controlled object 3.2, the output connection node 1-2 of the controlled object 3.2, the input connection node 1-1 of the controlled object 4.2, the output connection node 1-2 of the controlled object 4.2, the input connection node 1-1 of the controlled object 4.3, the output connection node 1-2 of the controlled object 4.3, and the input connection node 3-1 of the control object are sequentially connected to form a ring network, and there are a total of eight controlled objects in the ring network.

The output connection node 4-2 of the control object, the input connection node 2-1 of the controlled object 1.4, the output connection node 2-2 of the controlled object 1.4, the input connection node 2-1 of the controlled object 1.1, the output connection node 2-2 of the controlled object 1.1, the input connection node 2-1 of the controlled object 2.1, the output connection node 2-2 of the controlled object 2.1, the input connection node 2-1 of the controlled object 2.2, the output connection node 2-2 of the controlled object 2.2, the input connection node 2-1 of the controlled object 3.2, the output connection node 2-2 of the controlled object 3.2, the input connection node 2-1 of the controlled object 3.3, the output connection node 2-2 of the controlled object 3.3, the input connection node 2-1 of the controlled object 4.3, the output connection node 2-2 of the controlled object 4.3, the input connection node 2-1 of the controlled object 4.4, the output connection node 2-2 of the controlled object 4.4, and the input connection node 4-1 of the control object are sequentially connected to form a ring network, and there are a total of eight controlled objects in the ring network.

According to the control system based on a crossed multi-ring-network redundant network topology structure provided by the present invention, the connection nodes of the control object can be connected to the plurality of controlled objects to form the ring networks, such that the number of the connection nodes of the control object can be effectively reduced, thereby reducing the power consumption of the control object. Moreover, the controlled objects can be placed in the plurality of different ring networks, there are redundant connections between the control object and the controlled objects in the control system, and there are standby redundant networks that can be connected when the connection nodes or the networks are abnormal, such that the reliability of the whole control system is improved. In addition, each group of connection nodes of the controlled object in the present invention has a bypass function, such that the nodes are directly connected when the controlled object fails or loses power, thereby not affecting the communication between the control object and other controlled objects.

## Claims

1. A control system based on a crossed multi-ring-network redundant network topology structure, comprising:
a control object having a plurality of groups of first connection nodes (1-1, 1-2, 2-1, 2-2, 3-1, 3-2); and
a plurality of controlled objects (1.1, 1.2, 2.1, 2.2, 1.3), each of the plurality of controlled objects (1.1, 1.2, 2.1, 2.2, 1.3) having one or more groups of second connection nodes (1-1, 1-2, 2-1, 2-2);
wherein any one of the plurality of groups of first connection nodes (1-1, 1-2, 2-1, 2-2, 3-1, 3-2) in the control object are sequentially connected to the second connection nodes (1-1, 1-2, 2-1, 2-2) of at least two of the plurality of controlled objects (1.1, 1.2, 2.1, 2.2, 1.3) to form a ring network, the plurality of groups of first connection nodes (1-1, 1-2, 2-1, 2-2, 3-1, 3-2) of a same control object are positioned in different ring networks, the plurality of groups of second connection nodes (1-1, 1-2, 2-1, 2-2) of a same controlled object are positioned in different ring networks, the plurality of groups of first connection nodes (1-1, 1-2, 2-1, 2-2, 3-1, 3-2) corresponding to the control object form a plurality of ring networks, and the plurality of ring networks comprise the plurality of controlled objects (1.1, 1.2, 2.1, 2.2, 1.3).

2. The control system according to claim 1, wherein under a condition that each of the controlled objects (1.1, 1.2, 2.1, 2.2, 1.3) has more groups of second connection nodes (1-1, 1-2, 2-1, 2-2), the plurality of ring networks connect at least two of the plurality of groups of second connection nodes (1-1, 1-2, 2-1, 2-2).

3. The control system according to claim 1 or 2, wherein a number of the controlled objects (1.1, 1.2, 2.1, 2.2, 1.3) is N*N, N is an integer greater than 1, the control object has N groups of first connection nodes (1-1, 1-2, 2-1, 2-2, 3-1, 3-2), and any one of the groups of first connection nodes (1-1, 1-2, 2-1, 2-2, 3-1, 3-2) of the control object are sequentially connected to the second connection nodes (1-1, 1-2, 2-1, 2-2) of 2N controlled objects (1.1, 1.2, 2.1, 2.2, 1.3) to form the ring network.

4. The control system according to claim 1 or 2, wherein under a condition that a given one of the controlled objects (1.1, 1.2, 2.1, 2.2, 1.3) fails or loses power, the given controlled object sets each of the groups of second connection nodes (1-1, 1-2, 2-1, 2-2) to be in an on state.

5. The control system according to claim 1 or 2, wherein each of the groups of first connection nodes (1-1, 1-2, 2-1, 2-2, 3-1, 3-2) and each of the groups of second connection nodes (1-1, 1-2, 2-1, 2-2) comprise an output connection node and an input connection node connected to each other.

6. The control system according to claim 1 or 2, wherein each of the first connection nodes (1-1, 1-2, 2-1, 2-2, 3-1, 3-2) and the second connection nodes (1-1, 1-2, 2-1, 2-2) comprises an Ethernet interface or a serial port.

7. The control system according to claim 1 or 2, wherein the control object comprises a valve base controller for a direct current converter station, a remote terminal unit for a power plant with a substation, a monitoring background, or a protection information substation.

8. The control system according to claim 1 or 2, wherein each of the controlled objects (1.1, 1.2, 2.1, 2.2, 1.3) comprises a submodule controller, a protective device for a power plant with a substation, a measurement and control device, or an intelligent terminal.

## Patentansprüche

1. Steuersystem auf Grundlage einer gekreuzten Multiringnetzwerkstruktur mit redundanter Netzwerktopologie, umfassend:
ein Steuerungsobjekt mit einer Vielzahl von Gruppen von ersten Verbindungsknoten (1-1, 1- 2, 2- 1, 2-2, 3- 1, 3-2); und
eine Vielzahl von gesteuerten Objekten (1.1, 1.2, 2.1, 2.2, 1.3), wobei jedes der Vielzahl von gesteuerten Objekten (1.1, 1.2, 2.1, 2.2, 1.3) eine oder mehrere Gruppen von zweiten Verbindungsknoten (1-1, 1-2, 2-1, 2-2) aufweist;
wobei beliebige der Vielzahl von Gruppen von ersten Verbindungsknoten (1-1, 1-2, 2-1, 2-2, 3-1, 3-2) in dem Steuerungsobjekt hintereinander mit den zweiten Verbindungsknoten (1-1, 1-2, 2-1, 2-2) von wenigstens zwei der Vielzahl von gesteuerten Objekten (1.1, 1.2, 2.1, 2.2, 1.3) verbunden sind, um ein Ringnetzwerk zu bilden, wobei die Vielzahl von Gruppen von ersten Verbindungsknoten (1-1, 1-2, 2-1, 2-2, 3-1, 3-2) eines selben Steuerungsobjekts in unterschiedlichen Ringnetzwerken angeordnet ist, wobei die Vielzahl von Gruppen von zweiten Verbindungsknoten (1-1, 1-2, 2-1, 2-2) eines selben Steuerungsobjekts in unterschiedlichen Ringnetzwerken angeordnet ist, wobei die Vielzahl von Gruppen von ersten Verbindungsknoten (1-1, 1-2, 2-1, 2-2, 3-1, 3-2), die dem Steuerungsobjekt entspricht, eine Vielzahl von Ringnetzwerken bildet, und die Vielzahl von Ringnetzwerken die Vielzahl von gesteuerten Objekten (1.1, 1.2, 2.1, 2.2, 1.3) umfasst.

2. Steuersystem nach Anspruch 1, wobei unter der Bedingung, dass jedes der gesteuerten Objekte (1.1, 1.2, 2.1, 2.2, 1.3) mehr Gruppen von zweiten Verbindungsknoten (1-1, 1-2, 2-1, 2-2) aufweist, die Vielzahl von Ringnetzwerken wenigstens zwei der Vielzahl von Gruppen von zweiten Verbindungsknoten (1-1, 1-2, 2-1, 2-2) verbindet.

3. Steuersystem nach Anspruch 1 oder 2, wobei eine Anzahl der gesteuerten Objekten (1.1, 1.2, 2.1, 2.2, 1.3) N*N beträgt, N eine Ganzzahl größer als 1 ist, das Steuerungsobjekt N Gruppen von ersten Verbindungsknoten (1-1, 1-2, 2-1, 2-2, 3-1, 3-2) aufweist und beliebige der Gruppen von ersten Verbindungsknoten (1-1, 1-2, 2-1, 2-2, 3-1, 3-2) der Steuerungsobjekte hintereinander mit dem zweiten Verbindungsknoten (1-1, 1-2, 2-1, 2-2) von 2N gesteuerten Objekten (1.1, 1.2, 2.1, 2.2, 1.3) verbunden sind, um das Ringnetzwerk zu bilden.

4. Steuersystem nach Anspruch 1 oder 2, wobei unter der Bedingung, dass ein gegebenes der gesteuerten Objekten (1.1, 1.2, 2.1, 2.2, 1.3) ausfällt oder stromlos wird, das gegebene gesteuerte Objekt die einzelnen Gruppen von zweiten Verbindungsknoten (1-1, 1-2, 2- 1, 2-2) in einen Einschaltzustand versetzt.

5. Steuersystem nach Anspruch 1 oder 2, wobei die Gruppen von ersten Verbindungsknoten (1-1, 1-2, 2-1, 2-2, 3-1, 3-2) und die Gruppen von zweiten Verbindungsknoten (1-1, 1-2, 2-1, 2-2) jeweils einen Ausgangsverbindungsknoten und einen Eingangsverbindungsknoten umfassen, die miteinander verbunden sind.

6. Steuersystem nach Anspruch 1 oder 2, wobei die ersten Verbindungsknoten (1-1, 1-2, 2-1, 2-2, 3-1, 3-2) und die zweiten Verbindungsknoten (1-1, 1-2, 2-1, 2-2) jeweils eine Ethernet-Schnittstelle oder einen seriellen Anschluss umfassen.

7. Steuersystem nach Anspruch 1 oder 2, wobei das Steuerungsobjekt eine Ventilfußsteuereinrichtung für eine Gleichstromwandlerstation, eine Remote-Endgeräteinheit für ein Kraftwerk mit einer Unterstation, einen Überwachungshintergrund oder eine Schutzinformationsunterstation umfasst.

8. Steuersystem nach Anspruch 1 oder 2, wobei die gesteuerten Objekte (1.1, 1.2, 2.1, 2.2, 1.3) jeweils eine Untermodulsteuereinrichtung, eine Schutzvorrichtung für ein Kraftwerk mit einer Unterstation, eine Mess- und Steuervorrichtung oder ein intelligentes Endgerät umfassen.

## Revendications

1. Système de commande basé sur une structure topologique de réseau redondant à réseaux multi-anneaux croisés, comprenant :
un objet de commande ayant une pluralité de groupes de premiers nœuds de connexion (1-1, 1-2, 2-1, 2-2, 3-1, 3-2) ; et
une pluralité d'objets commandés (1.1, 1.2, 2.1, 2.2, 1.3), chacun de la pluralité d'objets commandés (1.1, 1.2, 2.1, 2.2, 1.3) ayant un ou plusieurs groupes de deuxièmes nœuds de connexion (1-1, 1-2, 2-1, 2-2) ;
dans lequel l'un quelconque de la pluralité des groupes de premiers nœuds de connexion (1-1, 1-2, 2-1, 2-2, 3-1, 3-2) dans l'objet de commande sont connectés séquentiellement aux deuxièmes nœuds de connexion (1-1, 1-2, 2-1, 2-2) d'au moins deux de la pluralité d'objets commandés (1.1, 1.2, 2.1, 2.2, 1.3) pour former un réseau en anneau, la pluralité de groupes de premiers nœuds de connexion (1-1, 1-2, 2-1, 2-2, 3-1, 3-2) d'un même objet de commande sont positionnés dans différents réseaux en anneau, la pluralité des groupes de deuxièmes nœuds de connexion (1-1, 1-2, 2-1, 2-2) d'un même objet commandé sont positionnés dans différents réseaux en anneaux, la pluralité des groupes de premiers nœuds de connexion (1-1, 1-2, 2-1, 2-2, 3-1, 3-2) correspondant à l'objet de commande forme une pluralité de réseaux en anneaux, et la pluralité des réseaux en anneau comprend la pluralité des objets commandés (1.1, 1.2, 2.1, 2.2, 1.3).

2. Système de commande selon la revendication 1, dans lequel à condition que chacun des objets commandés (1.1, 1.2, 2.1, 2.2, 1.3) ait plus de groupes de deuxièmes nœuds de connexion (1-1, 1-2, 2-1, 2-2), la pluralité de réseaux en anneau connecte au moins deux de la pluralité de groupes de deuxièmes nœuds de connexion (1-1, 1-2, 2-1, 2-2).

3. Système de commande selon la revendication 1 ou 2, dans lequel un nombre d'objets commandés (1.1, 1.2, 2.1, 2.2, 1.3) est N*N, N est un entier supérieur à 1, l'objet de commande a N groupes de premiers nœuds de connexion (1-1, 1-2, 2-1, 2-2, 3-1, 3-2), et l'un des groupes de premiers nœuds de connexion (1-1, 1-2, 2-1, 2-2, 3-1, 3-2) de l'objet de commande sont connectés séquentiellement aux deuxièmes nœuds de connexion (1-1, 1-2, 2-1, 2-2) de 2N objets commandés (1.1, 1.2, 2.1, 2.2, 1.3) pour former le réseau en anneau.

4. Système de commande selon la revendication 1 ou 2, dans lequel à condition que l'un des objets commandés (1.1, 1.2, 2.1, 2.2, 1.3) tombe en panne ou perd de la puissance, l'objet commandé donné définit chacun des groupes de deuxièmes nœuds de connexion (1-1, 1-2, 2-1, 2-2) pour qu'ils soient dans un état actif (ON).

5. Système de commande selon la revendication 1 ou 2, dans lequel chacun des groupes de premiers nœuds de connexion (1-1, 1-2, 2-1, 2-2, 3-1, 3-2) et chacun des groupes de deuxièmes nœuds de connexion (1-1, 1-2, 2-1, 2-2) comprend un nœud de connexion de sortie et un nœud de connexion d'entrée connectés l'un à l'autre.

6. Système de commande selon la revendication 1 ou 2, dans lequel chacun des premiers nœuds de connexion (1-1, 1-2, 2-1, 2-2, 3-1, 3-2) et des deuxièmes nœuds de connexion (1-1, 1-2, 2-1, 2-2) comprend une interface Ethemet ou un port série.

7. Système de commande selon la revendication 1 ou 2, dans lequel l'objet de commande comprend un contrôleur de base de soupape pour une station de conversion de courant continu, une unité terminale distante pour une centrale électrique avec une sous-station, un arrière-plan de surveillance, ou une sous-station d'information de protection.

8. Système de commande selon la revendication 1 ou 2, dans lequel chacun des objets commandés (1.1, 1.2, 2.1, 2.2, 1.3) comprend un contrôleur de sous-module, un dispositif de protection pour une centrale électrique avec une sous-station, un dispositif de mesure et de commande, ou un terminal intelligent.
